Europäisches Patentamt

European Patent Office

Office européen des brevets

(19)

(11) Veröffentlichungsnummer: **0 190 604**
**A2**

(12) # EUROPÄISCHE PATENTANMELDUNG

(21) Anmeldenummer: 86100778.9

(22) Anmeldetag: 22.01.86

(51) Int. Cl.⁴: **H 04 N 5/222**

(30) Priorität: 08.02.85 DE 3504316

(43) Veröffentlichungstag der Anmeldung:
13.08.86 Patentblatt 86/33

(84) Benannte Vertragsstaaten:
AT CH DE GB LI NL SE

(71) Anmelder: ANT Nachrichtentechnik GmbH
Gerberstrasse 33
D-7150 Backnang(DE)

(72) Erfinder: Stiehle, Hubert, Dipl.-Ing.
Giebelau 15
D-7150 Backnang(DE)

(74) Vertreter: Schickle, Gerhard, Dipl.-Ing.
ANT Nachrichtentechnik GmbH Patent- und
Lizenzabteilung Gerberstrasse 33
D-7150 Backnang(DE)

(54) Beleuchtungsvorrichtung für die Teilnehmer einer Bildkommunikation.

(57) Eine Vorrichtung zur Beleuchtung der Teilnehmer einer Bildkommunikation, bei der jeder der Teilnehmer vor mindestens einem das Bild der Gegenseite wiedergebenden Monitor (1, 2, 3) und mindestens einer den Teilnehmer aufnehmenden Videokamera (4, 5) plaziert ist, besteht darin, daß in der Ebene, auf die die Blicke der den (die) Monitorbildschirm(e) (1, 2, 3) betrachtenden Teilnehmer gerichtet sind, mindestens eine leuchtende Fläche (6) angeordnet ist.

FIG. 1

Croydon Printing Company Ltd.

## Beleuchtungsvorrichtung für die Teilnehmer
## einer Bildkommunikation

Die vorliegende Erfindung betrifft eine Vorrichtung zur Beleuchtung der Teilnehmer einer Bildkommunikation, bei der jeder der Teilnehmer vor mindestens einem das Bild der Gegenseite wiedergebenden Monitor und mindestens einer den Teilnehmer aufnehmenden Videokamera plaziert ist.

Bei der Bildkommunikation, z.B. Videokonferenz oder Bildfernsprechen, müssen die Teilnehmer mit genügend großer Lichtintensität beleuchtet werden, sodaß die Videokameras ein gut erkennbares Bild von den Teilnehmern aufnehmen können. Gleichzeitig darf die Beleuchtung die Teilnehmer nicht blenden, sodaß sie auch die Bilder auf den Monitoren gut und ohne große Anstrengung der Augen erkennen können.

Aus der NTZ Archiv, Bd. 2 (1980), Heft 5, Seiten 87 - 94, ist eine aus mehreren Punktlichtstrahlern bestehende Beleuchtungsvorrichtung bekannt, die die Personen schräg von oben beleuchtet. Es besteht die Gefahr, daß eine solche mit hoher Leuchtdichte arbeitende Beleuchtung die Teilnehmer blendet und in deren Gesichtern unvorteilhafte Schatten erzeugt.

Der Erfindung liegt nun die Aufgabe zugrunde, eine Vorrichtung zur Beleuchtung der Teilnehmer einer Bildkommunikation anzugeben, welche die Teilnehmer mit für die Videokameras genügend großer Lichtstärke so beleuchtet, daß in den Gesichtern der Teilnehmer keine unvorteilhaften Schatten entstehen, aber die Teilnehmer nicht blendet.

Erfindungsgemäß wird diese Aufgabe dadurch gelöst, daß in der Ebene, auf die die Blicke der den (die) Monitorbildschirm(e) betrachtenden Teilnehmer gerichtet sind, mindestens eine leuchtende Fläche angeordnet ist.

Zweckmäßige Ausführungen der Erfindung gehen aus den Unteransprüchen hervor.

Dadurch, daß erfindungsgemäß die Teilnehmer direkt von vorn beleuchtet werden, bilden sich keine Schattierungen, welche die Gesichter der Teilnehmer unvorteilhaft und unnatürlich wirken lassen. Außerdem ist die Bleuchtung blendfrei für die Teilnehmer, weil die für die Videokameras erforderliche Lichtstärke durch ein über eine große Fläche mit relativ geringer Leuchtdichte verteiltes Licht erzeugt wird.

Anhand eines in der Zeichnung dargestellten Ausführungsbeispiels wird nachfolgend die Erfindung näher erläutert. Es zeigen

Figur 1    eine mehrere Monitore umgebende leuchtende Fläche
           von vorn und

Figur 2    diese Anordnung von der Seite.

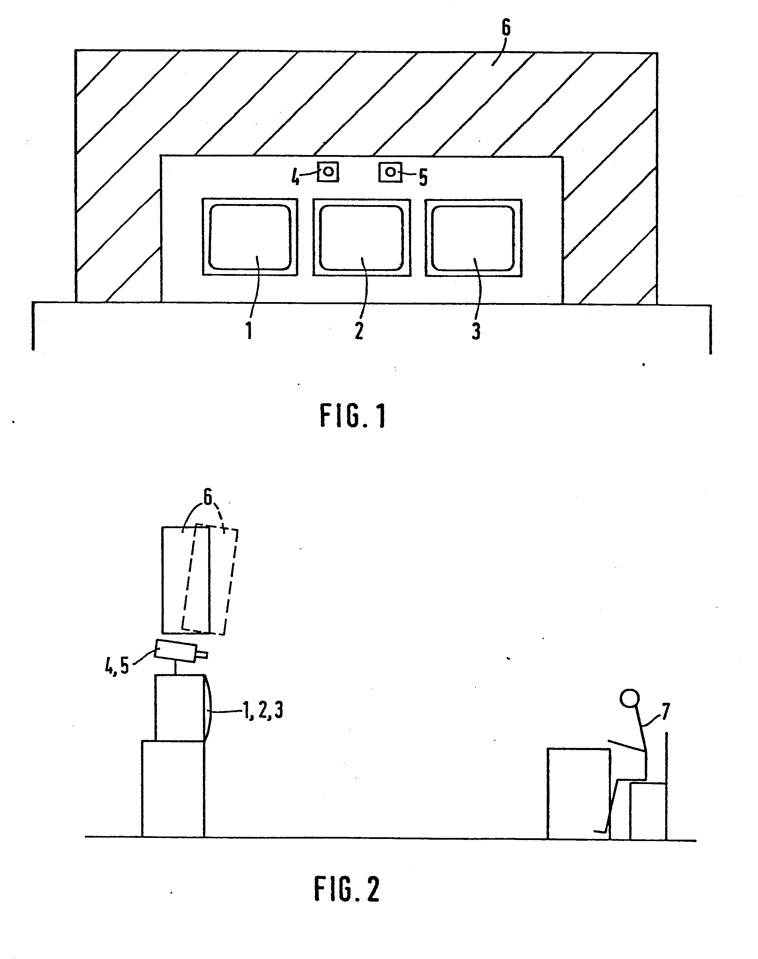

Beispielsweise für eine Videokonferenz sind, wie in Fig. 1 dargestellt, mehrere Monitore 1, 2, 3 nebeneinander und darüber Videokameras 4, 5 angeordnet. Die Monitore 1, 2, 3 geben die Bilder der auf der Gegenseite in einem anderen Konferenzraum sitzenden Teilnehmer und gegebenenfalls auch die Bilder der ihre Blicke auf diese Monitore 1, 2, 3 richtenden Teilnehmer selbst wieder.

Die vor den Monitoren 1, 2, 3 sitzenden Teilnehmer der Videokonferenz werden von den Videokameras 4, 5 aufgenommen. Dazu müssen die Teilnehmer mit einer genügend großen Lichtstärke ausgeleuchtet werden. Als Beleuchtungsvorrichtung dient hier eine leuchtende Fläche 6, welche in der Ebene liegt, auf die die Blicke der die Monitorbildschirme betrachtenden Teilnehmer gerichtet sind. Diese leuchtende Fläche 6 strahlt also ihr Licht direkt von vorn auf die Teilnehmer ab, wodurch eine unvorteilhafte Schattenbildung in den Gesichtern vermieden
wird.

Die leuchtende Fläche 6 bei dem in der Fig. 1 dargestellten
Ausführungsbeispiel erstreckt sich in Form eines U entlang
der vertikalen Seiten und entlang der oberen horizontalen
Seite der nebeneinander angeordneten Monitore 1, 2, 3.
Natürlich sind auch andere Formen der leuchtenden Fläche 6
oder gar mehrerer leuchtender Flächen möglich. So können
z.B. an nur zwei horizontalen und/oder vertikalen Seiten
der Monitore leuchtende Flächen angeordnet sein, oder es
kann sich eine leuchtende Fläche rund um die Monitore erstrecken.

Die leuchtende Fläche 6 besteht aus einer lichtstreuenden
Scheibe, z.B. einer milchigen Plexiglasscheibe, und mehreren
dahinter verteilt angeordneten Lichtquellen. Entweder ist
die lichtstreuende Scheibe so gestaltet und sind dahinter
die Lichtquellen so angeordnet, daß die Leuchtdichte über
die ganze leuchtende Fläche gleichmäßig verteilt ist oder
vom äußeren Rand nach innen hin abnimmt. Eine von außen
nach innen zu den Monitoren hin abnehmende Leuchtdichte
verhindert Blendung bei höherem Lichtbedarf der Kameras.
Die leuchtende Fläche 6 ist zweckmäßigerweise in der
Ebene der Bildschirme angeordnet.

Wie die Seitenansicht der Videokonferenzeinrichtung in
Fig. 2 verdeutlicht, kann die leuchtende Fläche 6 auch zu
den vor den Monitoren 1, 2, 3 und Videokameras 4, 5
platzierten Teilnehmer 7 hin leicht geneigt sein. Bei
Neigung der leuchtenden Flächen sollte ihre Verlängerung
vor den Bildschirmen liegen, weil sonst Licht auf die
Bildschirme fallen könnte, was für den Betrachter zu einer Kontrastminderung der Bilder führt.

BK 3542G0604

Die Leuchtdichte der leuchtenden Fläche kann, damit die
Teilnehmer nicht geblendet werden, relativ gering gehalten
werden (z.B. 1000 cd/m$^2$). Trotzdem kann aber die von den
Kameras geforderte hohe Leuchtstärke erzeugt werden, nämlich dadurch, daß bei gleichbleibender Leuchtintensität
eine entsprechend große lichtabstrahlende Fläche gewählt
wird.

5
- 𝒳 -

ANT Nachrichtentechnik GmbH                    E7/Th/ht
Gerberstraße 33                                BK 85/2
D-7150   Backnang


Patentansprüche:


1. Vorrichtung zur Beleuchtung der Teilnehmer einer Bildkommunikation, bei der jeder der Teilnehmer vor mindestens
   einem das Bild der Gegenseite wiedergebenden Monitor und
   mindestens einer den Teilnehmer aufnehmenden Videokamera
   plaziert ist, dadurch gekennzeichnet, daß in der Ebene,
   auf die die Blicke der den (die) Monitorbildschirm(e)
   (1, 2, 3) betrachtenden Teilnehmer gerichtet sind, mindestens eine leuchtende Fläche (6) angeordnet ist.

2. Vorrichtung nach Anspruch 1, dadurch gekennzeichnet, daß
   die leuchtende Fläche (6) zu einem U geformt ist und sich
   entlang der beiden vertikalen Seiten und entlang einer
   horizontalen Seite des Monitors bzw. mehrerer nebeneinander und/oder übereinander angeordneten Monitore (1, 2, 3)
   erstreckt.

3. Vorrichtung nach Anspruch 1, <u>dadurch gekennzeichnet</u>, daß sich die leuchtende Fläche (6) rund um den Monitor bzw. die nebeneinander und/oder übereinander angeordneten Monitore (1, 2, 3) erstreckt.

4. Vorrichtung nach einem der vorhergehenden Ansprüche, <u>dadurch gekennzeichnet</u>, daß die leuchtende Fläche (6) in der Ebene der Monitorbildschirme liegt.

5. Vorrichtung nach einem der vorhergehenden Ansprüche, <u>dadurch gekennzeichnet</u>, daß die leuchtende Fläche (6) in Richtung auf den (die) Teilnehmer (7) hin geneigt ist.

6. Vorrichtung nach einem der vorhergehenden Ansprüche, <u>dadurch gekennzeichnet</u>, daß die leuchtende Fläche (6) aus einer lichtstreuenden Scheibe mit dahinter angeordneten Lichtquellen besteht.

7. Vorrichtung nach Anspruch 6, <u>dadurch gekennzeichnet</u>, daß die Lichtintensität der leuchtenden Fläche (6) vom äußeren Rand in Richtung auf den (die) Monitor(e) (1, 2, 3) hin abnimmt.

FIG. 1

FIG. 2